# FASCICULE DE BREVET EUROPEEN

(11) **EP 0 384 861 B1**
(45) Date de publication et mention de la délivrance du brevet: **16.06.1993**
(21) Numéro de dépôt: 90420087.0
(22) Date de dépôt: 20.02.1990
(51) Int. Cl.: C01B 11/18

(54) **Procédé de destruction des hypochlorites dans une solution de perchlorate**
Verfahren zum Zerstören von Hypochloriten in einer Perchloratlösung
Process for destroying hypochlorites in a perchlorate solution

(30) Priorité: 22.02.1989 FR 8902536
(43) Date de publication de la demande: 29.08.1990
(73) Titulaire: ELF ATOCHEM S.A., 92800 Puteaux (FR)
(72) Inventeur: Pralus, Christian, F-69450 Saint-Cyr-Au-Mont-d'Or (FR)

(56) Documents cités:
- Eléments de la technique relevés; néant.

## Description

La présente invention concerne un procédé de destruction des hypochlorites, ou ions ClO⁻, dans une solution de perchlorate de métal alcalin, comme une solution de perchlorate de sodium, provenant de l'électrolyse d'une solution aqueuse de chlorate dudit métal alcalin, comme une solution de chlorate de sodium, avant cristallisation du perchlorate.

Sauf à laisser séjourner la solution de perchlorate à sa sortie de la cellule d'électrolyse dans un réacteur dit d'évolution pendant une durée incompatible avec les impératifs du production industrielle, il subsiste dans ladite solution suffisamment d'hypochlorites pour causer une corrosion importante du cristallisoir fait le plus généralement en acier au carbone ou en acier inoxydable.

Il est encore possible de faire intervenir dans la solution de perchlorate des produits tels que l'urée par exemple. Mais l'urée peut donner lieu à formation de chloramines qui sont elles-mêmes corrosives et qui risquent de provoquer des explosions.

Il est donc de l'intérêt de l'industrie de disposer d'un autre moyen que le temps ou que de composés tels que l'urée pour détruire le plus complètement possible les hypochlorites dans une solution de perchlorate, avant cristallisation du perchlorate.

Bien que le peroxyde d'hydrogène soit connu pour réagir avec les ions ClO⁻, il n'a pas été décrit jusqu'ici un procédé de destruction desdits ions par ce moyen dans une solution de perchlorate de métal alcalin provenant de l'électrolyse d'une solution de chlorate dudit métal alcalin, en particulier lorsque du chrome hexavalent est présent.

Le chrome hexavalent qui permet, comme il est connu, de minimiser les phénomènes de réduction cathodique demande à être retenu au mieux dans le système en boucle du procédé électrolytique de fabrication du perchlorate, pour des raisons économiques aussi bien que techniques. Le chrome hexavalent est engagé le plus généralement sous formé de bichromate tel que le bichromate de sodium.

Compte-tenu de la forte sensibilité du peroxyde d'hydrogène on pouvait en effet s'attendre à une destruction insuffisamment efficace des hypochlorites et/ou à une disparition du chrome hexavalent comme dans le cas par exemple de la destruction des hypochlorites par des sulfures solubles dans l'eau décrite dans le brevet francais n°2168530.

C'est pourtant une destruction efficace des ions ClO⁻ dans une solution aqueuse de perchlorate, sans incidence sur le chrome hexavalent présent avec lesdits ions le cas échéant, qu'autorise le peroxyde d'hydrogène dans le procédé de la présente invention qui évite les inconvénients des procédés connus, en particulier sur le plan de la sécurité.

La présente invention consiste en effet en un procédé pour détruire les hypochlorites, sans incidence sur le chrome hexavalent s'il est présent avec eux, dans une solution de perchlorate de métal alcalin provenant de l'électrolyse d'une solution aqueuse de chlorate dudit métal alcalin, caractérisé en ce que ladite solution de perchlorate est mise en contact avec du peroxyde d'hydrogène qui lui est ajouté en quantité telle que le rapport molaire peroxyde d'hydrogène disponible/hypochlorites soit égal ou supérieur à 1.

Dans la définition ainsi donnée de l'invention, le peroxyde d'hydrogène disponible est le peroxyde d'hydrogène qui n'est pas consommé dans la solution de perchlorate en l'absence d'ions ClO⁻. Cette précision vaut dans tout ce qui suit.

Pour déterminer le peroxyde d'hydrogène qui peut être consommé par des composés autres que les hypochlorites, des ions métalliques par exemple, on peut utiliser la solution de perchlorate comme dans l'invention mais dans laquelle les ions ClO⁻ ont disparu pratiquement quantitativement grâce à une durée d'évolution suffisamment longue de la solution initiale de perchlorate.

Il n'est généralemennt pas nécessaire dans le cadre de l'invention que le rapport molaire peroxyde d'hyrogène disponible/hypochlorites soit supérieur à 1,1.

Le peroxyde d'hydrogène est engagé sous forme de solution aqueuse, par exemple une solution à 50 % de peroxyde d'hydrogène en poids.

La destruction des ions ClO⁻ par le peroxyde d'hydrogène dans le procédé de l'invention est rapide et ne demande normalement pas plus d'environ 5 minutes.

Le procédé de l'invention trouve un intérêt industriel particulier dans le cas de la fabrication de perchlorate de sodium.

La solution de perchlorate dans laquelle les hypochlorites doivent être détruits peut alors contenir par exemple, par litre, environ : 500 g. à 1100 g. de perchlorate de sodium, 5 g. à 300 g. de chlorate de sodium, jusqu'à 6 g. de bichromate de sodium Na₂ Cr₂O₇, une quantité d'ions ClO⁻ correspondant à une quantité de NaClO jusqu'à 6 g.

Les valeurs de la température et du pH auxquelles est réalisée la destruction des ions ClO⁻ sont pratiquement celles qu'a normalement la solution de perchlorate par exemple à sa sortie de la cellulse d'électrolyse ou à sa sortie du réacteur d'évolution. Le pH est indifféremment acide ou alcalin et peut être compris par exemple entre environ 5 et 12 ; la température peut ainsi être comprise entre d'assez larges limites, par exemple entre environ 20°C et 90°C, souvent entre 40°C et 60°C.

Le réacteur de destruction des hypochlorites est naturellement de préférence un réacteur agité, avec évent. Il est fait en un matériau qui peut par exemple être à base de chlorure de polyvinyle renforcé.

La destruction des hypochlorites est pratiquement totale en procédant selon l'invention ; la teneur finale en ions ClO⁻, exprimée en NaClO, est inférieure généralement à environ 10 mg/l, le plus souvent même inférieure à 2 mg/l.

Le bon déroulement de la destruction des hypochlorites peut être suivi en relation avec la valeur du potentiel redox de la solution de perchlorate mesurée avec une électrode de référence au calomel et une électrode de mesure en platine.

Dire que la destruction des hypochlorites n'a pas d'incidence sur le chrome hexavalent signifie ici que la disparition du chrome à la valence 6⁺ est négligeable et égale le plus généralement à moins de 0,01 % et souvent à moins de 0,005 %.

Les exemples suivants, donnés à titre indicatif mais non limitatif, illustrent le procédé de l'invention.

Dans chacun de ces exemples la solution de perchlorate de sodium de départ s'est avérée suffisamment exempte d'impuretés susceptibles d'interférer avec le peroxyde d'hydrogène en l'absence d'ions ClO⁻, pour que le peroxyde d'hydrogène disponible se confonde avec le peroxyde d'hydrogène engagé.

### Exemple 1 :

Une solution de perchlorate de sodium provenant de l'électrolyse d'une solution aqueuse de chlorate de sodium contient, par litre : 1055 g. de perchlorate de sodium, 69,5 g. de chlorate de sodium, 0,5 g. d'hypochlorites exprimés en NaClO, mais pas de chrome hexavalent.

Ladite solution est mise en contact à pH égal à 12, durant 5 minutes à 56°C en réacteur agité, avec une quantité de peroxyde d'hydrogène, sous forme d'une solution aqueuse à 50 % en poids dudit peroxyde, telle que le rapport molaire peroxyde d'hydrogène/hypochlorites soit égal à 1.

La solution de perchlorate de sodium résultant de l'opération ci-dessus contient, par litre, moins de 2 mg. d'hypochlorites exprimés en NaClO.

### Exemple 2 :

Une solution de perchlorate de sodium du type de celle de l'exemple 1, contient, par litre, les mêmes quantités de perchlorate de sodium et de chlorate de sodium que dans l'exemple 1, mais cette fois, toujours par litre, 3,6 g. d'ions ClO⁻ exprimés en NaClO⁻ et aussi 2,5 g. de chrome hexavalent exprimés en Na₂Cr₂O₇.

Ladite solution est mise en contact à pH égal à 9,5, durant 5 minutes à 56°C en réacteur agité, avec la solution de peroxyde d'hydrogène de l'exemple 1 engagée de façon à avoir un rapport peroxyde d'hydrogène/hypochorites égal à 1.

La solution de perchlorate de sodium qui résulte de l'opération ci-dessus contient, par litre, moins de 2 mg. d'ions ClO⁻ exprimés en NaClO tandis qu'environ 0,01 % du chrome hexavalent ne s'y trouve plus dans cet état.

### Exemple 3 :

La solution de perchlorate de sodium de l'exemple 1 contient, en plus des constituants déjà énoncés, et par litre, 2,5 g. de chrome hexavalent exprimé en Na₂Cr₂O₇.

En suivant le même processus et les mêmes conditions que dans l'exemple 2 pour la mise en contact de ladite solution avec le peroxyde d'hydrogène, pratiquement les mêmes résultats que dans l'exemple 2 sont atteints quant à la disparition des ions ClO⁻ et à la conservation du chrome hexavalent dans la solution de perchlorate finalement obtenue.

### Exemple 4 :

On répète l'exemple 3 mais en adoptant un pH égal à 5,7 au lieu de 9,5.

La destruction des ions ClO⁻ se fait aussi efficacement que dans les exemples précédents et seulement environ 0,005 % de chrome hexavalent ne se retrouve pas dans cet état dans la solution de perchlorate de sodium obtenue finalement.

### Exemple 5 :

Une solution de perchlorate contenant les mêmes quantités de perchlorate de sodium, de chlorate de sodium et de chrome hexavalent que la solution de l'exemple 2 mais contenant cette fois, par litre, 5 g. d'ions ClO⁻ exprimés en NaClO est mise en contact à pH égal à 5,5 durant 5 minutes à 56°C avec le peroxyde d'hydrogène en suivant le processus défini pour les exemples précédents en assurant cette fois un rapport peroxyde d'hydrogène/hypochlorites égal à 1,1.

On constate que l'efficacité de destruction des ions ClO⁻ et le taux de conservation du chrome hexavalent sont pratiquement les mêmes que dans les autres exemples.

### Exemple 6 :

L'exemple 5 est répété à l'exception de la valeur du pH qui est de 10 au lieu de 5,5. Les mêmes résultats que dans l'exemple 5 sont atteints.

## Revendications

1. Procédé pour détruire les hypochlorites, ou ions ClO⁻, sans incidence sur le chrome hexavalent s'il est présent avec eux, dans une solution de perchlorate de métal alcalin provenant de l'électrolyse d'une solution aqueuse de chlorate dudit métal alcalin, caractérisé en ce que ladite solution de perchlorate est mise en contact avec du peroxyde d'hydrogène qui lui est ajouté en quantité telle que le rapport molaire peroxyde d'hydrogène disponible/hypochlorites soit égal ou supérieur à 1.

2. Procédé selon la revendication 1, caractérisé en ce que le rapport molaire peroxyde d'hydrogène disponible/hypochlorites n'est pas supérieur à 1,1.

3. Procédé selon l'une des revendications 1 et 2, caractérisé en ce que la destruction des hypochlorites est réalisée à un pH acide ou alcalin.

4. Procédé selon la revendication 3, caractérisé en ce que le pH est compris entre 5 et 12.

5. Procédé selon l'une des revendications 1 à 4, caractérisé en ce que la destruction des hypochlorites est réalisée à une température comprise entre 20°C et 90°C.

## Patentansprüche

1. Verfahren zur Zerstörung von Hypochloriten oder ClO -Ionen ohne Auswirkung auf das sechswertige Chrom, sofern dieses gemeinsam mit ihnen vorhanden ist, in einer Alkaliperchloratlösung, die aus der Elektrolyse einer wäßrigen Chloratlösung dieses Alkalimetalls stammt, dadurch gekennzeichnet, daß die Perchloratlösung mit Wasserstoffperoxid zusammengebracht wird, welches ihr in einer solchen Menge zugefügt ist, daß das Molverhältnis verfügbares Wasserstoffperoxid/Hypochlorite gleich oder gröber als 1 ist.

2. Verfahren nach Anspruch 1, dadurch gekennzeichnet, daß das Molverhältnis verfügbares Wasserstoffperoxid/ Hypochlorite nicht gröber als 1,1 ist.

3. Verfahren nach Anspruch 1 oder 2, dadurch gekennzeichnet, daß die Zerstörung der Hypochlorite bei einem sauren oder alkalischen pH-Wert durchgeführt wird.

4. Verfahren nach Anspruch 3, dadurch gekennzeichnet, daß der pH-Wert zwischen 5 und 12 liegt.

5. Verfahren nach einem der Ansprüche 1 bis 4, dadurch gekennzeichnet, daß die Zerstörung der Hypochlorite bei einer Temperatur zwischen 20 und 90°C durchgeführt wird.

## Claims

1. Process for destroying hypochlorites, or ClO⁻ ions, without affecting the hexavalent chromium if it is present with them, in an alkali metal perchlorate solution arising from the electrolysis of an aqueous chlorate solution of the said alkali metal, characterised in that the said perchlorate solution is brought into contact with hydrogen peroxide which is added to it in a quantity such that the available hydrogen peroxide/hypochlorites molar ration is equal to or greater than 1.

2. Process according to Claim 1, characterised in that the available hydrogen peroxide/hypochlorites molar ratio is not greater than 1.1.

3. Process according to one of Claims 1 and 2, characterised in that destruction of hypochlorites is carrier out at an acidic or alkaline pH.

4. Process according to Claim 3, characterised in that the pH is between 5 and 12.

5. Process according to one of Claims 1 to 4, characterised in that destruction of hypochlorites is carrier out at a temperature of between 20°C and 90°C.
